(19) Europäisches Patentamt
European Patent Office
Office européen des brevets

(11) **EP 2 491 090 B1**

(12) **EUROPÄISCHE PATENTSCHRIFT**

(45) Veröffentlichungstag und Bekanntmachung des Hinweises auf die Patenterteilung:
**01.04.2015 Patentblatt 2015/14**

(21) Anmeldenummer: **11702794.6**

(22) Anmeldetag: **01.02.2011**

(51) Int Cl.:
*C09K 5/06* (2006.01)          *D01F 1/10* (2006.01)
*D01D 5/088* (2006.01)        *D01F 6/56* (2006.01)
*B29C 47/88* (2006.01)        *C08J 5/18* (2006.01)

(86) Internationale Anmeldenummer:
**PCT/EP2011/000450**

(87) Internationale Veröffentlichungsnummer:
**WO 2011/098225 (18.08.2011 Gazette 2011/33)**

(54) **WÄRMESPEICHERNDE FORMKÖRPER**

HEAT-STORING MOLDINGS

CORPS MOULÉS À ACCUMULATION DE CHALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2010 DE 102010007497**

(43) Veröffentlichungstag der Anmeldung:
**29.08.2012 Patentblatt 2012/35**

(73) Patentinhaber: **Thüringisches Institut Für Textil- Und Kunststoff- Forschung E.V.
07407 Rudolstadt (DE)**

(72) Erfinder:
• SCHÜTZ, Angelo
  **07407 Rudolstadt (DE)**
• REINEMANN, Stefan
  **07407 Rudolstadt (DE)**

(74) Vertreter: **Plate, Jürgen et al
Plate Schweitzer Zounek
Patentanwälte
Rheingaustrasse 196
65203 Wiesbaden (DE)**

(56) Entgegenhaltungen:
**WO-A2-01/35511     DE-A1-102008 015 782**

EP 2 491 090 B1

**Beschreibung**

Die vorliegende Erfindung betrifft ein Verfahren zum Herstellen faser- oder folienartiger Formkörper aus einer plastifizierten Mischung, die bezogen auf ihr Gewicht, aus 60 bis 10 Gew.% einer Trägerkomponente und 40 bis 90 Gew.% eines Phasenwechselmaterials besteht, wobei, bezogen auf das Gewicht der plastifizierten Mischung, die Trägerkomponente 5 bis 20 Gew.% eines Polymers oder Polymerblends aus der Gruppe LDPE (Low Density Polyethylene), HDPE (High Density Polyethylene), PMMA (Polymethylmethacrylat), Polycarbonat und Mischungen davon, 5 bis 20 Gew.% eines Styrol-Blockcopolymers und 0 bis 20 Gew.% eines oder mehrerer Additive enthält, und das Phasenwechselmaterial gewählt ist aus der Gruppe umfassend natürliche und synthetische Paraffine, Polyethylenglykol (= Polyethylenoxid), langkettige Dialkylether, langkettige Alkylalkohole, niedermolekulare, hochkristalline PE-Wachse und Mischungen davon, und die plastifizierte Mischung mit einer Temperatur von 130 bis 220 °C durch eine Extrusionsdüse zu faser- oder folienartigen Formkörpern extrudiert wird.

Im Weiteren betrifft die Erfindung einen faser- oder folienartigen Formkörper, der bezogen auf sein Gewicht, aus 60 bis 10 Gew.% einer Trägerkomponente und 40 bis 90 Gew.% eines Phasenwechselmaterials besteht, wobei, bezogen auf das Gewicht des Formkörpers, die Trägerkomponente 5 bis 20 Gew.% eines Polymers oder Polymerblends aus der Gruppe LDPE, HDPE, PMMA, Polycarbonat oder Mischungen davon, 5 bis 20 Gew.% eines Styrol-Blockcopolymers und 0 bis 20 Gew.% eines oder mehrerer Additive enthält, und das Phasenwechselmaterial gewählt ist aus der Gruppe umfassend natürliche und synthetische Paraffine, Polyethylenglykol und Mischungen davon.

Bei der Phasenübergangstemperatur des Phasenwechselmaterials (im Folgenden mit PCM abgekürzt) weisen die erfindungsgemäßen Fasern oder Folien (im Folgenden auch als PCM-Fasern bzw. Folien bezeichnet) eine Wärmespeicher-Enthalpie von bis zu 230 J/g auf. Die Fasern oder Folien eignen sich zur Herstellung von textilen und flächigen Materialien, denen sie vorteilhafte thermische Eigenschaften verleihen. Aufgrund ihrer hohen Wärmespeicher-Enthalpie gleichen die PCM-Fasern/Folien Temperaturänderungen durch Aufnahme oder Abgabe von Wärme aus. Als textile Materialien kommen vor allem textile Bekleidungsverbunde, Gewebe und Gewirke mit anderen synthetischen oder natürlichen Textilfasern sowie technische Textilien und technische textile Verbunde in Frage. Die erfindungsgemäßen PCM-Fasern lassen sich aber auch zu PCM-Kurzschnitt- bzw. Stapelfasern verarbeiten, die ebenfalls in textilen Applikationen (Wärmeschutz-Bekleidung, technische Textilien) verwendet werden.

Blends aus Phasenwechselmaterialien (Phase Change Material, PCM) und polymeren thermoplastischen Trägerkomponenten, wie Polyethylen und Polypropylen und daraus erzeugte Formkörper sind im Stand der Technik bekannt. Einschlägige Patentschriften beschreiben u.a. die Herstellung von Fasern mittels konventioneller Schmelzspinnprozesse. Im Folgenden werden Blends aus einem oder mehreren PCM und einer polymeren Trägerkomponente als PCM-Polymer-Compounds bezeichnet.

Als PCM werden bevorzugt Paraffine eingesetzt, aber auch langkettige Dialkylether, langkettige Alkylalkohole, niedermolekulare, hochkristalline PE-Wachse. Ein grundsätzliches Problem bei der Verwendung von Paraffin besteht darin, dass dieses beim Plastifizieren bzw. Schmelzen stark erhitzt wird und nach dem Austritt aus einer Extrusionsdüse und dem damit verbundenen Druckabfall verdampft und Blasen bildet. Die Blasenbildung verursacht Defekte in dem extrudierten Formkörper. Im Fall des Schmelzspinnens von Fasern führt dies zum Abriss bzw. Bruch von Filamenten. Im Weiteren ist bekannt, dass aus PCM-Polymer-Compounds hergestellte Formkörper, wie Granulate, Folien, Platten etc. bei Überschreiten der Phasenübergangstemperatur verflüssigtes PCM (vorzugsweise Paraffin) freisetzen. Dieser Vorgang wird in Fachkreisen auch als "Ausschwitzen" bezeichnet und ist zurückzuführen auf oberflächennahe PCM-Depots. PCM wie Paraffine sind mit einer Vielzahl von Polymeren schlecht oder nicht mischbar. Durch Plastifizieren bzw. Schmelzen und mechanische Scherung ist es jedoch möglich, Paraffin in einer polymeren Trägerkomponente zu emulgieren. In einer solchen Schmelzemulsion liegt das Paraffin in Form von tröpfchenartigen Einschlüssen bzw. Domänen vor. Die PCM- oder Paraffin-Tröpfchen finden sich auch in den aus der Schmelze erzeugten Formkörpern. Weist die Oberfläche des Formkörpers produktions- oder gebrauchsbedingte Defekte, wie Risse oder Brüche auf, so kann bei Überschreiten der Phasenwechseltemperatur verflüssigtes PCM aus unmittelbar, unterhalb der Oberfläche liegenden Tröpfchen austreten und an die Umgebung abgegeben werden.

US 5885475 beschreibt die Herstellung von schmelzegesponnenen Polyolefinfasern, die als Phasenwechselmaterial bis zu 60 Gew.% an unverkapselten kristallinen Kohlenwasserstoffen, wie Paraffin enthalten. Um das Paraffin in der Faser zu binden und ein Ausschwitzen zu vermeiden, werden der Schmelze bzw. dem Blend Silica-Partikel in einem Mengenanteil von 7 bis 16 Gew.% zugegeben.

US 4737537 und US 4908166 betreffen die Herstellung von chemisch vernetzten PCM-Polyethylen Compounds, um höhere Füllgrade an PCM Komponente in der Polymermatrix zu realisieren. Solche chemisch vernetzten PCM-Polyethylen Compounds sind jedoch für die Faserherstellung mittels konventioneller Schmelzspinnprozesse nicht geeignet, da aufgrund der bereits beim Plastifizieren/Schmelzen einsetzenden Vernetzung und der damit verbundenen Viskositätserhöhung die Spinngeschwindigkeit auf einen Wert verringert werden muss, der eine wirtschaftliche Nutzung nicht ermöglicht.

In der DE 43 36 097 A1 ist ein Verfahren zur Herstellung von monofilen Fäden aus fadenbildenden Polymeren durch Schmelzspinnen offenbart. Als fadenbildende Polymere sind u.a. Polyamide, Polyester, Polyethylen, Polypropylen und Polyacrylnitril genannt. Direkt nach dem Austritt aus dem Spinnkopf können die Monofile mit Luft angeblasen und gekühlt werden. Sie durchlaufen danach ein Flüssigkeitsbad, das eine Temperatur im Bereich von - 10 bis + 150 °C aufweist. Zur Herstellung von PCM-haltigen Polymerfasern ist dieses Verfahren wenig geeignet, denn diese haben im heißen, thermoplastischen Zustand praktisch keinerlei Zugfestigkeit, was sie unter ihrem Eigengewicht sofort von der Spinndüse abreißen lässt.

Im Weiteren sind sogenannte Bikomponenten-Schmelzspinnverfahren bekannt, bei denen die Extrusionsdüse zwei Zonen aufweist, derart dass eine Faser mit zwei räumlich gegeneinander abgegrenzten Filamenten bzw. Bereichen aus verschiedenen Materialien extrudiert wird. Verfahren dieser Art sind in der US 2003/0035951 A1 und der US 2007/0089276 A1 offenbart. Bikomponentenfasern haben beispielsweise einen Querschnitt des Typs Kern-Mantel (Core-Shell) oder Multifilament (Island-in-Sea), wobei der Kern oder die Filamente aus einem PCM und der Mantel bzw. die umgebende Matrix aus einem thermoplastischen Polymer bestehen. Für die Herstellung von wärmespeichernden, PCM-haltigen Fasern haben sich Bikomponenten-Schmelzspinnverfahren als wenig geeignet erwiesen. Die hierfür erforderlichen Extrusionsköpfe haben eine komplexe Geometrie und sind anfällig für Düsenverstopfung. Dieses Problem ist durch die vorstehend beschriebene Blasenbildung und die damit einhergehenden Faserabrisse, deren Rückstände die Spinndüsen verkleben, verschärft. Aus diesem Grund ist in Bikomponenten-Fasern der PCM-Anteil in der Faser auf niedrige Werte um 30 Gew.% beschränkt. Dementsprechend ist die mit Bikomponenten-Fasern erzielbare Wärmespeicherkapazität begrenzt.

Eine bekannte Methode, die vorstehenden Probleme zu vermeiden, beruht auf der Verwendung von PCM-Mikrokapseln, bei denen das PCM von einer Polymerhülle umschlossen ist. Die PCM-Mikrokapseln werden in einem vorgeschalteten Verfahrensschritt, bevorzugt mittels eines Extruders, in die Trägerkomponente eingearbeitet. Der plastifizierte Blend aus Trägerkomponente und PCM-Mikrokapseln wird als Strang extrudiert und granuliert. Das erhaltene Granulat dient als Ausgangsmaterial für das Faser-Schmelzspinnen. Auch bei dieser Methode ist der Mengenanteil des PCM in dem Granulat und damit in der Faser auf Werte um 30 Gew.% beschränkt. Um mehr PCM in die Faser einzuarbeiten, müsste die Menge und damit die Dichte an PCM-Mikrokapseln im Granulat auf einen Wert erhöht werden, bei dem die intensive Scherung im Extruder eine vermehrte Zerstörung der PCM-Mikrokapseln und Freisetzung von PCM bewirkt. Die hiermit verbundenen nachteiligen Effekte wie Blasenbildung sind vorstehend dargelegt.

US 2002/0105108 verwendet mit Nylon 6 verkapseltes PCM in Polyethylen als Trägermatrix, wobei der Mengenanteil an PCM in der Faser maximal 30 Gew.% beträgt.

Im Weiteren wurden PCM-Polymer-Compounds entwickelt, die sich für die Herstellung von mehr oder minder massiven Formkörpern eignen. WO 2009/118344 A1 (= DE 10 2008 015 782) offenbart ein Verfahren zur Herstellung eines thermoplastischen Materials mit einer Wärmespeicher-Enthalpie von bis zu 135 J/g. Das thermoplastische Material beinhaltet ein Phasenwechselmaterial, insbesondere Paraffin, und als Trägerkomponente einen Blend aus PMMA und Styrol-Blockcopolymeren. Aus dem thermoplastischen Material wird strangextrudiertes Granulat hergestellt. Zudem ist vorgesehen, aus dem thermoplastischen Material Fasern herzustellen, ohne jedoch ein konkretes Extrusionsverfahren hierfür zu offenbaren. Das Granulat gemäß WO 2009/118344 A1 setzt bei Extraktionstests mit Temperatur-Lastwechselzyklen praktisch kein Paraffin frei. Aus elektronenmikroskopischen Aufnahmen von Kryobruchstellen des Granulats ist ersichtlich, dass das Paraffin in Form von tropfenartigen Domänen in der Trägerkomponente eingeschlossen ist. Die Paraffin-Domänen haben Durchmesser im Bereich von 10 bis 100 $\mu$m.

Ausgehend von den in WO 2009/118344 A1 beschriebenen PCM-Polymer-Compounds und den Verfahren zu ihrer Herstellung haben die Erfinder versucht, schmelzgesponnene Fasern und extrudierte Folien mit einem Gehalt von 40 bis 75 Gew.% Paraffin und einer Feinheit im Bereich von 5 bis 70 tex bzw. einer Dicke von 100 bis 1000 $\mu$m herzustellen. Hierbei traten die folgenden Probleme auf:

- zahlreiche Abrisse der Faser/Folie (insbesondere beim Verstrecken)
- niedrige Reißkraft von weniger als 3 cN/tex bzw. weniger als 30 N/mm$^2$

     a) hohe Ausschwitzverluste

Vermutlich sind diese Probleme auf das bei Fasern/Folien ungünstige Verhältnis von Oberfläche zu Volumen (~ 1/Radius bzw. ~ 1/Dicke) zurückzuführen. Eine Feinheit von 5 bis 70 tex entspricht einem Faserdurchmesser von etwa 80 bis 300 $\mu$m. Gemäß den in WO 2009/118344 A1 dargelegten Untersuchungen an strangextrudierten Granulaten haben die Paraffin-Domänen Abmessungen im Bereich von 10 bis 100 $\mu$m. Aufgrund der im Vergleich zum Faserdurchmesser beträchtlichen Größe der Paraffin-Domänen und der hohen Füllgrade von bis zu 75 Gew.-% ist die Wahrscheinlichkeit dafür, dass Paraffin-Domänen unmittelbar an die relativ zum Faservolumen große Faseroberfläche angrenzen, hoch. Dementsprechend können kleine Defekte in der Faseroberfläche, die beim Spinnen und Verstrecken entstehen, zu erheblichen Paraffinverlusten und damit verbunden einer strukturellen Schwächung der Faser und zum Ausschwitzen führen. Ähnliche Probleme traten bei der Herstellung von extrudierten Folien mit Dicken im Bereich von weniger als 1000 μm auf.

Die Aufgabe der vorliegenden Erfindung besteht dementsprechend darin, die mit dem Stand der Technik verbundenen Probleme zu überwinden und ein Verfahren zur Herstellung faser- oder folienartiger Formkörper mit hoher Wärmespeicherkapazität, die sich für textile Anwendungen eignen, zu schaffen.

Diese Aufgabe wird gelöst durch ein Verfahren, bei dem eine plastifizierte Mischung bereit gestellt wird, die bezogen auf ihr Gewicht, aus 60 bis 10 Gew.% einer Trägerkomponente und 40 bis 90 Gew.% eines Phasenwechselmaterials besteht, wobei, bezogen auf das Gewicht der plastifizierten Mischung, die Trägerkomponente 5 bis 20 Gew.% eines Polymers oder Polymerblends aus der Gruppe LDPE, HDPE, PMMA, Polycarbonat und Mischungen davon, 5 bis 20 Gew.% eines Styrol-Blockcopolymers und 0 bis 20 Gew.% eines oder mehrerer Additive enthält, und das Phasenwechselmaterial gewählt ist aus der Gruppe umfassend natürliche und synthetische Paraffine, langkettige Dialkylether, langkettige Alkylalkohole, niedermolekulare, hochkristalline PE-Wachse, Polyethylenglykol und Mischungen davon, und die plastifizierte Mischung mit einer Temperatur von 130 bis 220 °C durch eine Extrusionsdüse zu faser- oder folienartigen Formkörpern extrudiert wird, dadurch gekennzeichnet, dass die Formkörper innerhalb einer Zeitspanne von 0,05 bis 4 s nach dem Austritt aus der Extrusionsdüse auf eine Temperatur im Bereich von 10 bis 80 °C abgeschreckt werden.

In einer bevorzugten Ausführungsform besteht die plastifizierte Mischung aus 60 bis 25 Gew.-% einer Trägerkomponente und 40 bis 75 Gew.-% eines Phasenwechselmaterials.

In dem erfindungsgemäßen Verfahren werden bevorzugt amorphe Polymere, wie SEBS, SEEPS und PMMA, als Trägerkomponente und/oder als Styrol-Blockcopolymer eingesetzt. Diese zeigen keinen Schmelzpunkt, sondern lediglich einen Glas-Übergangspunkt. Bei zunehmender Temperatur werden sie immer weicher und dünnflüssiger, bei abnehmender Temperatur entsprechend dickflüssiger und härter. Die Temperatur der Extrusionsdüse kann daher in etwa gleich hoch oder sogar etwas niedriger (d.h. um etwa 10 bis 20 °C geringer) sein als die Temperatur in der letzten Zone des Spinnextruders bzw. der Spinnpumpe. Bei Verwendung von kristallinen Polymeren muss die Düsentemperatur dagegen höher sein als die Schmelztemperatur der Polymere, ansonsten würde die Spinndüse sofort verstopfen.

Weiterbildungen des erfindungsgemäßen Verfahrens sind dadurch gekennzeichnet, dass:

- die Formkörper auf eine Temperatur im Bereich von 10 bis 50 °C, vorzugsweise 15 bis 40 °C, und insbesondere 15 bis 25 °C abgeschreckt werden;

- die plastifizierte Mischung aus Trägerkomponente und Phasenwechselmaterial mit einer Temperatur von 160 bis 200 °C extrudiert wird;

- die Formkörper mit einer mittleren Kühlrate von 60 bis 600 K/s, vorzugsweise 80 bis 300 K/s, und insbesondere 120 bis 200 K/s abgeschreckt werden;

- die Trägerkomponente als Pulverblend mit einer Korngröße von kleiner/gleich 2 mm vorgelegt und in einer Plastifiziervorrichtung gemischt und plastifiziert wird; und das Phasenwechselmaterial in flüssiger Form mit einer Temperatur im Bereich von 50 bis 130 °C der Plastifiziervorrichtung zugeführt und mit der plastifizierten Trägerkomponente während einer Zeitspanne von 2,5 bis 10 min gemischt wird;

- die Formkörper zum Abschrecken mit einem Kühlfluid beaufschlagt werden, insbesondere dass die Formkörper durch ein Wasserbad, das gegebenenfalls Tenside in einer Konzentration von 0,1 bis 3 g/l enthält, geführt werden;

- die Formkörper nach dem Austritt aus der Extrusionsdüse und vor dem Abschrecken durch einen Luftspalt mit einer Länge von 0,5 bis 10 cm, vorzugsweise 1 bis 5 cm geführt werden;

- die Formkörper von der Extrusionsdüse mit einer Geschwindigkeit von 5 bis 50 m/min, vorzugsweise 10 bis 30 m/min abgezogen werden;

- die Formkörper nach dem Austritt aus der Extrusionsdüse mit einem Streckfaktor von 1,1 bis 2 verstreckt werden; und

- die Formkörper mit einem Streckfaktor von 2 bis 12 nachverstreckt werden.

Das PCM-Material muss nicht notwendig in flüssiger Form zugesetzt werden. Es kann auch in fester Form zugegeben werden. Von Vorteil ist in jedem Fall ein hoher Füllgrad der Extruderschnecke im Einzugsbereich. Dadurch werden hohe Scherkräfte erreicht, was zu einer gleichmäßigeren Verteilung der PCM-Domänen führt.

Mit einer beheizten und thermisch gut isolierten Spinndüse können die Schmelzefäden auch direkt in das Kühlbad, insbesondere in das Wasserbad, versponnen werden. Auf diese Weise lässt sich ein Nassspinnverfahren realisieren. Die Düse ragt dabei zweckmäßig etwa 1 bis 20 mm in das Kühlbad. Vorteilhaft wird die Düsentemperatur auf etwa 70 bis 100 °C abgesenkt und die Kühlbad-Temperatur auf etwa 40 bis 60 °C angehoben. Der Druck der Schmelze ist entsprechend erhöht. Diese Verfahrensweise hat den Vorteil, dass die zunächst dünnflüssigen PCM-haltigen Schmelzefäden noch schneller abgeschreckt werden. Die Kühlflüssigkeit bewirkt zudem einen Auftrieb der Fäden, so dass sie weniger leicht unter ihrem eigenen Gewicht abreißen.

In einer besonderen Ausführungsform enthält das Kühlbad, d.h. insbesondere das Wasserbad, nachvernetzende, die Oberfläche der Formkörper hydrophobisierende Polysiloxane, bevorzugt amino-modifizierte Polysiloxane. Durch diese Maßnahme lässt sich ein Zusammenkleben der dünnen Spinnfilamente beim Eintritt in das Kühlbad verhindern.

Eine weitere Aufgabe der vorliegenden Erfindung besteht darin, für textile Anwendungen geeignete faser- oder folienartige Formkörper mit hoher Wärmespeicherkapazität bereit zu stellen.

Diese Aufgabe wird gelöst durch einen Formkörper, der bezogen auf sein Gewicht, aus 60 bis 10 Gew.% einer Trägerkomponente und 40 bis 90 Gew.% eines Phasenwechselmaterials besteht, wobei, bezogen auf das Gewicht des Formkörpers, die Trägerkomponente 5 bis 20 Gew.% eines Polymers oder Polymerblends aus der Gruppe LDPE, HDPE, PMMA, Polycarbonat und Mischungen davon, 5 bis 20 Gew.% eines Styrol-Blockcopolymers und 0 bis 20 Gew.% eines oder mehrerer Additive enthält, und das Phasenwechselmaterial gewählt ist aus der Gruppe umfassend natürliche und synthetische Paraffine, Polyethylenglykol und Mischungen davon, dadurch gekennzeichnet, dass der Formkörper eine Faser mit einer Feinheit von 5 bis 70 tex, einer Restdehnung von 5 bis 100 % und einer feinheitsbezogenen Reißkraft von 7 bis 15 cN/tex oder eine Folie mit einer Dicke von 100 bis 1000 $\mu$m, einer Restdehnung von 10 bis 100 % und einer Reißfestigkeit von 50 bis 200 N/mm$^2$ ist, und bei der Phasenübergangstemperatur des Phasenwechselmaterials eine Wärmekapazität von 70 bis 270 J/g aufweist.

Weiterbildungen der erfindungsgemäßen Formkörper sind dadurch gekennzeichnet, dass:

- sie, bezogen auf ihr Gewicht, aus 60 bis 10 Gew.-% einer Trägerkomponente und 40 bis 90 Gew.-% eines Phasenwechselmaterials besteht;
- das Phasenwechselmaterial eine Phasenübergangstemperatur im Bereich von 30 bis + 135 °C, bevorzugt von - 30 bis +85 °C, hat;
- das Styrol-Blockcopolymer ein Di- oder Tri-Blockcopolymer ist und eine erste und zweite polymere Komponente A und B und optional eine dritte polymere Komponente C umfasst, wobei A Styrol ist und B und C gewählt sind aus Ethylen, Butadien, Butylen, Isopren und Propylen;
- das Styrol-Blockcopolymer gewählt ist aus SB (Styrol-Butadien), SBS (Styrol-Butadien-Styrol), SIS (Styrol-Isopren-Styrol), SEBS (Styrol-Ethylen-Butylen-Styrol), SEPS (Styrol-Ethylen-Propylen-Styrol) und SEEPS (Styrol-poly-(Isopren-Butadien)-Styrol);
- der Formkörper als Additiv ein nanoskaliges Material, insbesondere Carbon-Nanotubes enthält; und
- der Formkörper nach einem Verfahren gemäß den Ansprüchen 1 bis 10 hergestellt ist.

Anstelle oder auch zusätzlich zu den genannten Paraffinen können auch Dialkylether als PCM-Materialen eingesetzt werden. Diese zeigen häufig eine besonders hohe Wärmekapazität im Bereich von 120 bis 300 J/g. Die Dialkylether lassen sich ebenso gut verarbeiten wie Paraffine. Es können aber auch langkettige Alkylalkohole, niedermolekulare, hochkristalline PE-Wachse eingesetzt werden.

Erfindungsgemäß umfasst der Begriff "nanoskaliges Material" ein Additiv, das in Form eines Pulvers, einer Dispersion oder eines Polymerblends vorliegt und Partikel enthält, die in mindestens einer Dimension, insbesondere Dicke oder Durchmesser eine Abmessung von kleiner 100 nm haben. So kommen als nanoskalige Materialien bzw. Komposite lipophile Schichtmineralien, z.B. Schichtsilikate und Bentone in Betracht, die bei der Plastifizierung der Spinnmasse exfolieren. Derartige Nanokomposite werden beispielsweise von Nanocor Corp. (AMCOL International Corp.) oder im Fall von Carbon-Nanotubes von Nanocyl S.A. angeboten.

Die Erfindung wird im Folgenden anhand von Figuren und Beispielen näher erläutert.

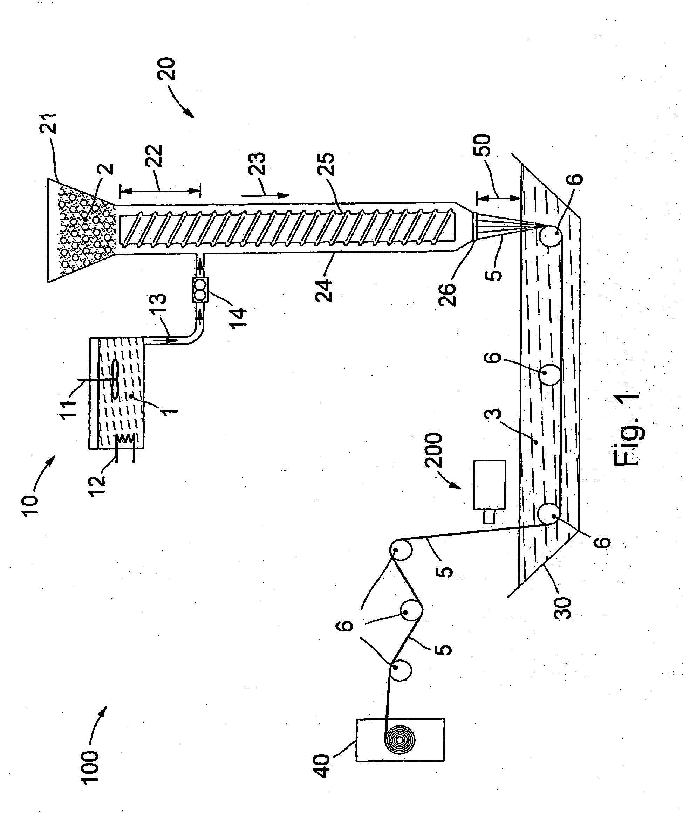

Fig. 1 zeigt eine Vorrichtung 100 zum Spinnen von Fasern oder zum Extrudieren von Folien nach dem erfindungsgemäßen Verfahren. Die Vorrichtung 100 umfasst einen Extruder 20 mit Vorlagebehältern 10 und 21 für Phasenwechselmaterial (PCM) 1 bzw. eine polymere Trägerkomponente 2 und einer als Spinndüse oder als Breitschlitzdüse ausgebildeten Extrusionsdüse 26. Der in Fig. 1 dargestellte Extruder 20 ist vertikal angeordnet. Die vertikale Anordnung des Extruders 20 bietet praktische Vorteile, ist jedoch nicht zwingend erforderlich. Alternativ kann ein horizontal angeordneter Extruder mit einem abgewinkelten Übergangsstück zu der Extrusionsdüse 26 mit einer Umlenkung zwischen beispielsweise 40° bis 90° verwendet werden. Als Extruder 20 eignen sich insbesondere Doppelschneckenextruder. Der Vorlagebehälter 10 ist vorteilhafterweise mit einer Heizung 12 und einem Rührer 11 ausgerüstet, um das PCM 1, bei dem es sich bevorzugt um Paraffin handelt, zu verflüssigen und zu homogenisieren. Der Vorlagebehälter 10 ist über eine Leitung 13 und eine Dosiervorrichtung, insbesondere eine Flüssigdosierpumpe 14 mit der Extruderkammer 24 verbunden. Die Trägerkomponente 2 liegt in der Regel als Granulat eines Blends oder als Mischung von Granulaten aus einem Styrol-Blockcopolymer und einem Polymer oder Polymerblend aus der Gruppe LDPE, HDPE, PMMA, Polycarbonat oder Mischungen davon, vor. Zudem kann der Vorlagebehälter 21 Additive, wie ein nanoskaligesMaterial, insbesondere Carbon-Nanotubes enthalten. Anstelle von lediglich einem Vorlagebehälter 21 können zwei oder mehr Vorlagebehälter für die einzelnen Bestandteile der polymeren Trägerkomponente und die Additive vorgesehen sein.

Die Richtung des Materialflusses im Extruder 20 ist in Fig. 1 durch einen Richtungspfeil 23 angezeigt. In Richtung des Materialflusses 23 wird das PCM 1 nach der Trägerkomponente 2 zugeführt. Dementsprechend werden die Bestandteile der Trägerkomponente 2 und ggf. ein oder mehrere Additive in einer Zone 22 plastifiziert und durchmischt, bevor das PCM 1 zugegeben wird. Erfindungsgemäß kann das PCM 1 auch zusammen mit der Trägerkomponente 2 in der eingangsseitigen Zone 22 plastifiziert werden: Hierzu können das PCM 1 und die Trägerkomponente 2 zusammen in dem Vorlagebehälter 21 oder getrennt in zwei Vorlagebehältern 21 und 10, die beide mit der Zone 22 verbunden sind, vorgehalten werden. Diese vereinfachte Verfahrensweise eignet sich für PCM 1 mit höherem Schmelzpunkt und Viskosität, bei denen eine dem Materialfluss 23 entgegengerichtete Verdrängung bzw. Rückstauung von verflüssigtem PCM 1 nicht auftritt.

Die Länge der Zone 22 beträgt zwischen 15 und 30 %, bezogen auf die Gesamtlänge des Extruders 20. Das Verfahren wird derart geführt, dass die Verweildauer der Schmelze zwischen dem Aufgabepunkt des PCM 1 und der Extrusionsdüse 26 mindestens 2,5 min beträgt. Diese Maßnahme gewährleistet eine gründliche Durchmischung des PCM 1 mit der Trägerkomponente 2. Um die Durchmischung des PCM 1 mit der Trägerkomponente 2 zu fördern, wird vorteilhaft ein Doppelschneckenextruder 20 verwendet.

Erfindungsgemäß wird das PCM 1 intensiv mit der polymeren Trägerkomponente 2, die bevorzugt aus einem PCM-affinen, amorphen Styrol-Blockcopolymer, wie SEBS, SBS, SEPS, SEPS, EPR und einem weiteren, insbesondere amorphen Polymer, wie PMMA besteht, und die optional anorganische Additive enthält, gemischt. Vorzugsweise wird hierfür ein Doppelschneckenextruder verwendet. Die polymere Trägerkomponente 2 bildet in dem PCM-Polymer-Compound eine dreidimensionale Netzstruktur aus, die das PCM 1 zurückhält. Die Netzstruktur wird durch das amorphe Polymer, insbesondere durch PMMA stabilisiert. Das Polymer beeinflusst die Morphologie und Festigkeit der beim Schmelzspinnen oder Extrudieren erhaltenen Filamente/Folie 5 in günstiger Weise. Gleiches gilt für Additive wie Multiwall-Carbon-Nanotubes. Durch die Zugabe von PMMA und optional Multiwall-Carbon-Nanotubes kann die Zahl der Abrisse und Brüche der Filamente/Folie verringert und die Ausbeute des Schmelzspinnprozesses bzw. der Folienextrusion gesteigert werden. Besteht die polymere Trägerkomponente 2 lediglich aus Styrol-Blockcopolymer, so haben die aus der Extrusionsdüse 26 austretenden Filamente/Folie 5 eine so geringe Festigkeit, dass ein kontinuierlicher Spinn- oder Folienabzug unmöglich ist (siehe Vergleichsbeispiel 2). PMMA oder andere Polymere, wie LDPE, HDPE oder Polycarbonat werden beim Plastifizieren/Schmelzen mehr oder minder homogen in die dreidimensionale Netzstruktur des Styrol-Blockcopolymers eingebettet und verlangsamen die Freisetzung von Paraffin. Dieser Effekt ist zu einem gewissen Teil vermutlich darauf zurückzuführen, dass nach Austritt der Schmelze aus der Extrusionsdüse das PMMA schneller als das Paraffin und das Styrol-Blockcopolymer erstarrt. Das erstarrte PMMA mindert die Beweglichkeit des verflüssigten Paraffins und stabilisiert den Schmelzfaden bzw. die Folie.

Über die Extrusionsdüse 26 wird die Schmelze in Form von Filamenten 5 oder einer Folie extrudiert. Die Filamente/Folie 5 werden durch ein mit einem Kühlfluid 3 gefülltes Becken 30 abgezogen. Bei dem Kühlfluid 3 handelt es sich vorzugsweise um Wasser oder um eine Mischung aus Wasser und einem Frostschutzmittel wie Ethylenglykol. Gegebenenfalls ist das Kühlfluid 3 mit einem Tensid versetzt, um zum Einen die Benetzung der Filamente/Folie 5 und damit den Wärmeübergang bzw. die Kühlung zu verbessern und zum Anderen die Haftung der Filamente/Folie an Abzugs- oder Umlenkrollen und die Verklebung der Filamente miteinander zu vermindern. Das Kühlfluid 3 wird mittels einer Temperiervorrichtung auf einer Temperatur im Bereich von -30 bis +60 °C gehalten. Vor dem Eintauchen in das Kühlfluid 3 durchlaufen die Filamente/Folie 5 einen Luftspalt 50, der die heiße Extrusionsdüse 26 von dem Kühlfluid 3 thermisch isoliert. Der Füllstand bzw. das Volumen des Kühlfluids 3 ist so gewählt, dass die Länge des Luftspaltes 50 zwischen 0,5 und 10 cm beträgt.

In einer vorteilhaften Weiterbildung der Erfindung wird zum Abschrecken der Filamente/Folie 5 ein gekühltes Gas, beispielsweise gekühlter Stickstoff als Kühlfluid eingesetzt. Hierzu werden die Filamente 5 durch einen rohrförmigen Kanal geführt, der über eine mit einer Dosiervorrichtung ausgerüstete Leitung an einen mit flüssigem Stickstoff gefüllten Behälter angeschlossen ist. Die Kühlrate der Filamente 5 wird durch die Länge des rohrförmigen Kanals und insbesondere durch die Flussrate des dem rohrförmigen Kanal zugeführten Stickstoffs gesteuert. Hierbei ist drauf zu achten, dass die Gasströmung im Kanal laminar erfolgt und Turbulenzen, die Querkräfte auf die Filamente 5 ausüben und einen Abriss verursachen können, vermieden werden. Zum Kühlen einer Folie mit Stickstoff wird diese an einem schlitzförmigen Auslass vorbeigeführt, der über eine mit einer Dosiervorrichtung ausgerüstete Leitung an den mit flüssigem Stickstoff gefüllten Behälter angeschlossen ist.

Der Abzug der Filamente/Folie 5 von der Extrusionsdüse 26 erfolgt mittels einer Wickelvorrichtung 40, wobei die Filamente/Folie 5 auf ihrem Weg von der Extrusionsdüse 26 zur Wickelvorrichtung 40 über Umlenkrollen 6 geführt werden. Die Abzugsgeschwindigkeit, d.h. die Drehzahl der Wickelspule oder -walze (Umdrehungen pro Minute) wird auf einen Wert eingestellt, bei dem die Filamente/Folie 5 mit einem Streckfaktor von 1,1 bis 2 verstreckt werden. Um die Drehzahl einzustellen bzw. zu kalibrieren wird der mittlere Durchmesser der Filamente/Folie 5 zum Einen nach dem Austritt aus der Extrusionsdüse 26 und zum Anderen vor der Wickelvorrichtung 40 mittels bekannter optischer Messvorrichtungen bestimmt. Beispielsweise umfasst die optische Messvorrichtung eine Laserlichtquelle mit einem strichförmigen, senkrecht zur Filamentachse ausgerichteten Strahlprofil und eine Digitalkamera mit einem CCD-Sensor. Die durch die Filamente 5 verursachte Abschattung des strichförmigen Strahlprofils dient als Maß für den Filamentdurchmesser bzw. -radius r. Wenn r um einen Betrag von $\Delta r$ abnimmt, so muss sich aufgrund der Volumenerhaltung das Filament um einen Betrag von $\Delta l$ verlängern. Unter der Annahme, dass die Filamente 5 zylinderförmig sind, ergibt sich für die Längenänderung bzw. den Streckfaktor (l + Δl) /l folgende Beziehung:

$$\pi \cdot r^2 \cdot l = \pi \cdot (r - \Delta r)^2 \cdot (l + \Delta l) \qquad \text{bzw.}$$

$$(l + \Delta l) / l = r^2 / (r - \Delta r)^2$$

Anhand dieser einfachen Beziehung und der optisch gemessenen Dickenänderung der Filamente 5 wird die Abzuggeschwindigkeit, d.h. Drehzahl der Wickelspule kalibriert.

Zur Messung der Foliendicke wird ein marktübliches Lasermikrometer, das als Messsignal die Lichtabschwächung nutzt, eingesetzt.

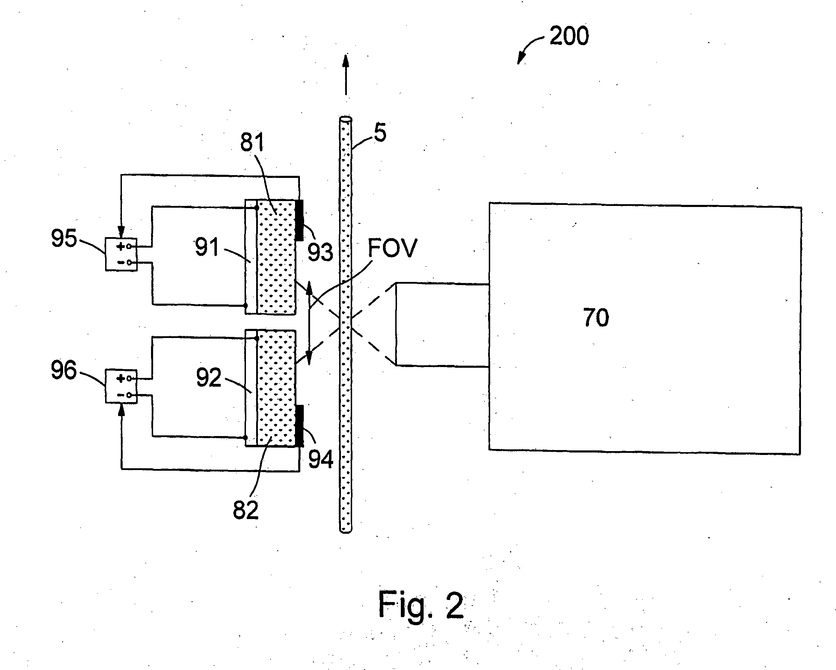

Im Weiteren ist in Fig. 1 eine thermografische Messvorrichtung 200 zur Bestimmung der Temperatur der Filamente/Folie 5 nach dem Abschrecken gezeigt. Der Aufbau der Messvorrichtung 200 wird nachfolgend in Verbindung mit Fig. 2 näher erläutert.

In einer weiteren, in Fig. 1 nicht gezeigten Prozessstufe werden die Filamente/Folie 5 nachverstreckt mit einem Streckfaktor zwischen 2 und 12 (Streckverhältnis 200 bis 1200 %).

Die nachverstreckten Spinnfäden weisen eine Feinheit von 5 bis 70 tex und eine Restdehnung zwischen 5 bis 100 % auf. Die Feinheitsbezogene Reißkraft liegt im Bereich von 7 bis 15 cN/tex.

Die nachverstreckten Folien weisen eine Dicke von 100 bis 1000 $\mu$m, eine Restdehnung von 10 bis 100 % und eine Reißfestigkeit von 50 bis 200 N/mm$^2$ auf. In unverstrecktem Zustand beträgt die Restdehnung der Folien 100 bis 1000 %.

Mit dem erfindungsgemäßen Verfahren sind auch Folien mit einer Dicke von bis zu 5000 $\mu$m herstellbar. Generell können Folien, insbesondere solche mit einer Dicke von weniger als 500 $\mu$m auch mittels Kühlwalzen anstelle eines Kühlfluids abgeschreckt werden. In einer zweckmäßigen Weiterbildung des erfindungsgemäßen Verfahrens werden die Folien mittels Kalanderwalzen nachkalandriert. Die erfindungsgemäßen Folien sind wasserundurchlässig und wasserabweisend. Zwei oder mehrere der Folien können miteinander verschweißt werden. Aufgrund ihrer hohen Restdehnung und Reißkraft sind die Folien mit Textilien, Gummi und sonstigen Geweben oder Gewirken kaschierbar bzw. vernadelbar. Bei einer Erhöhung der Temperatur über den Phasenumwandlungspunkt des PCM steigt die Transparenz der Folien stark an. Im Weiteren schrumpfen die Folien bei Temperaturerhöhung um einen Faktor von 0,1 bis 0,8. Die Folien sind bis zu einer Temperatur von 150 °C praktisch frei von Ausschwitzverlusten.

Eine Weiterbildung des erfindungsgemäßen Verfahrens umfasst zwei Schritte (a) und (b), wobei in Schritt (a) ähnlich wie vorstehend in Verbindung mit Fig. 1 beschrieben, das PCM und die polymere Trägerkomponente sowie ggf. Additive in einem ersten Extruder plastifiziert, gemischt und als Strang oder Mehrzahl von Strängen extrudiert und die Stränge mittels eines Schneidwerks granuliert werden. Das erhaltene Granulat wird in Schritt (b) mittels eines zweiten Extruders erneut plastifiziert und geschmolzen und, wie vorstehend in Verbindung mit Fig. 1 erläutert, zu Filamenten versponnen oder einer Folie extrudiert, wobei die Filamente bzw. die Folie unmittelbar nach dem Austritt aus der Extrusionsdüse abgeschreckt werden. Die zweistufige Ausführungsform des erfindungsgemäßen Verfahrens, gestattet es, den Vorgang des Schmelzspinnens von der Herstellung des PCM-Polymer-Compounds zu entkoppeln und den Prozessablauf und Materialfluss an logistische Vorgaben anzupassen und zu optimieren.

Wie vorstehend erwähnt, ist das Abschrecken essentiell für die Durchführung des erfindungsgemäßen Schmelzspinn- oder Folienextrusionsverfahrens. Unterbleibt das Abschrecken, so treten Abrisse und Brüche der Filamente/Folie in so hoher Frequenz auf, dass die Extrusionsdüse 26 bzw. nach weniger als einer Minute vollständig blockiert ist. Dieser Zusammenhang ist überraschend in Anbetracht der Tatsache, dass die Filamente/Folie 5 nach dem Austritt aus der Spinndüse 26 zunächst den Luftspalt 50 durchlaufen. Der Luftspalt 50 hat eine Länge von 0,5 bis 10 cm, so dass die Filamente/Folie 5 darin praktisch keine Wärme an die Umgebung abgeben. Dementsprechend nimmt die Viskosität des PCM-Polymer-Compounds im Luftspalt 50 nur unmerklich zu und insbesondere Paraffin liegt weiterhin als niederviskose Flüssigkeit ggf. sogar in dampfförmiger Phase vor. Dementsprechend sollten Brüche und Abrisse der Faser/Folie vorrangig im Luftspalt 50 auftreten, wobei die nachfolgende Abschreckung dieses Problem nur zu einem geringen Teil kompensieren kann. Völlig überraschend und im Widerspruch zu den vorstehenden Überlegungen gelingt es mittels der Abschreckung jedoch, Brüche und Abrisse der Faser/Folie praktisch vollständig zu eliminieren. Worauf die vorteilhafte Wirkung des Abschreckens beruht, konnte bislang nicht geklärt werden. Es wird jedoch vermutet, dass sich nach dem Austritt des PCM-Polymer-Compounds aus der Extrusionsdüse 26 das flüssige Paraffin und das Trägerpolymer entmischen, wobei die im Trägerpolymer emulgierten Paraffindomänen an Größe zunehmen. Diese mehr oder minder schnelle Entmischung wird durch das Abschrecken effektiv unterbunden, so dass die Paraffindomänen im wesentlichen die Größe beibehalten, in der sie in der Schmelze im Extruder kurz vor der Extrusionsdüse vorliegen. Sofern diese Hypothese zutrifft, sollten die Paraffindomänen in erfindungsgemäß abgeschreckten Fasern/Folie wesentlich kleiner sein als in massiven Formkörpern, die ohne Abschrecken aus dem PCM-Polymer-Compound hergestellt werden. Dies würde auch erklären, warum die erfindungsgemäßen Fasern/Folien bei Ausschwitztests praktisch kein Paraffin freisetzen.

Beim Austritt aus der Extrusionsdüse haben die Filamente/Folie die gleiche Temperatur wie die Extrusionsdüse, d.h. eine Temperatur im Bereich von 160 bis 200 °C. Um die erfindungswesentliche Abschreckung bzw. Kühlrate (K/s) der Filamente/Folie zu bestimmen, wird die Temperatur der Filamente/Folie unmittelbar nach dem Abschrecken gemessen. Hierzu wird die in Fig. 2 dargestellte, auf Infrarot-Thermographie basierende Messvorrichtung 200 eingesetzt. Die am Beispiel einer Faser erläuterte Messmethode wird in analoger Weise im Randbereich einer Folie angewendet. Die Messvorrichtung 200 umfasst eine Infrarotkamera 70 (Modell VarioTHERM® der Jenoptik GmbH mit Mikroskoplinse MWIR f/4,4 und Spektralbereich 3,4 bis 5 $\mu$m) und mindestens zwei massive Kalibrierkörper (81, 82), die aus dem gleichen PCM-Polymer-Compound wie die Faser bzw. die zu messenden Filamente 5 gefertigt sind. Mittels thermoelektrischer Peltier-Elemente (91, 92) werden die Kalibrierkörper (81, 82) auf vorgegebenen konstanten Temperaturen $T_1$ und $T_2$ gehalten. Die Temperatur jedes der Kalibrierkörper (81, 82) wird mit Thermoelementen (93, 94) überwacht. Die den Peltier-Elementen (91, 92) zugeführte elektrische Leistung wird mittels steuerbarer Spannungsversorgungen (95, 96), an deren Eingang das Messsignal der Peltier-Elemente (93, 94) anliegt, derart geregelt, dass die Kalibrierkörper (81, 82) konstant die vorgegebene Temperatur $T_1$ bzw. $T_2$ haben. $T_1$ und $T_2$ sind so gewählt, dass sie unterhalb und oberhalb der Temperatur $T_F$ des zu messenden Filaments 5 liegen, d.h. $T_1 < T_F < T_2$.

Bezogen auf das Gesichtsfeld der Infrarotkamera 70 (field of view, abgekürzt FOV) sind die Kalibrierkörper (81, 82) parallel zueinander und durch einen Spalt thermisch voneinander isoliert in einem Abstand von etwa 1 mm hinter dem zu messenden Filament 5 angeordnet. Die Infrarotkamera 70 ist auf das Filament 5 fokussiert, und bildet dieses simultan mit den Kalibrierkörpern (81, 82) auf dem Infrarotsensor ab. Die Messvorrichtung 200 gestattet es, die Temperatur des Filaments 5 mit einer Genauigkeit von besser als 2 K zu messen.

Die Kühlrate KR ergibt sich aus der Differenz der Temperatur Ts der Spinndüse und der Filamenttemperatur $T_F$ nach dem Abschrecken, der Abzug- bzw. Laufstrecke $I_A$ zwischen der Spinndüse und dem Messpunkt von $T_F$ unmittelbar nach der Abschreckung sowie der Abzuggeschwindigkeit v gemäß folgender Beziehung $KR=(T_S-T_F)\cdot v/I_A$.

Die Feinheit der erfindungsgemäßen Fasern bzw. Filamente wird nach dem Schwingungsverfahren gemäß DIN EN ISO 1973: 199512 mit einem Vibroskop 400 (Lenzing Instruments) gemessen.

Die Festigkeit bzw. Reißkraft und Restdehnung der Fasern wird gemäß DIN EN ISO 5079 bestimmt.

Die Festigkeit bzw. Reißkraft und Restdehnung von erfindungsgemäß hergestellten Folien wird gemäß DIN EN ISO 527-3 ermittelt an einem Folienstreifen mit einer Breite von 25 mm. Im Rahmen der vorliegenden Erfindung wird die nach DIN EN ISO 527-3 bestimmte Reißkraft in der auf die Querschnittsfläche (= Folienbreite x Foliendicke) bezogenen Einheit [N/mm$^2$] angegeben.

In einer besonderen Ausführungsform des Verfahrens bei bestimmten konstruktiven Voraussetzungen der Spinndüse bzw. des Düsenlochkanals zur Temperatursicherung ist es möglich, direkt in ein Spinnbad/Abschreckbad zu spinnen. In dieser Ausführungsform ist ein Luftspalt zwischen der Extrusionsdüse und dem Abschreckbad nicht erforderlich.

Im Weiteren ist im Rahmen der vorliegenden Erfindung vorgesehen, in dem Verfahren gemäß den Ansprüchen 1 bis 10 eine Vliesdüse zu verwenden, um Spinnvliese mit einem Flächengewicht von 200 bis 2000 g/m$^2$ zu erzeugern. Die erfindungsgemäßen Spinnvliese sind selbstverklebend und weisen eine Restdehnung von 100 bis 1000 % auf, sowie bei erhöhter Temperatur eine Schrumpfung um einen Faktor von 0,1 bis 0,8. Die Einzelfasern der Spinnvliese haben eine Reißfestigkeit von 5 bis 15 cN/tex.

Beispiele

In den nachfolgenden Beispielen 1 bis 4 werden die wesentlichen Merkmale des erfindungsgemäßen Schmelzspinnverfahrens mit anschließender Abschreckung zur Erzeugung von thermoplastischen Fasern aus PCM-Polymer-Compounds mit hohem Wärmespeichervermögen näher beschrieben.

Beispiel 1:

Mittels eines Doppelschneckenextruders des Typs ZSE 40 (Firma Leistritz) mit einem Verhältnis von Länge zu Durchmesser von 52 : 1 wurde zunächst ein Granulat aus Paraffin, PMMA und SEEPS hergestellt.

Die ersten beiden Zonen (Segmente 4D und 8D) des ZSE 40 Extruders wurden auf Temperaturen von 250 °C bzw. 260 °C aufgeheizt, um PMMA und Styrol-Blockcopolymer (SEEPS des Typs Septon® 4055 von Kuraray Co. Ltd) zu schmelzen und zu mischen. Paraffin des Typs RT 52 von Rubitherm Technologies GmbH wurde in einem heizbaren Vorratsbehälter auf eine Temperatur von 120 °C erwärmt und verflüssigt und über hermetisch abdichtende Dosierlanzen und eine Dosiervorrichtung (K-TRon Dosierwaage mit Membranpumpe) der PMMA/SEEPS-Schmelze zugegeben. Die Zugabe des Paraffins erfolgte im Schneckenzonenbereich (Segmente 16D bis 22D) des ZSE 40 Extruders.

Die Schneckendrehzahl und der gesamte Massendurchsatz im ZSE 40 Extruder betrugen 800 U/min und 35 kg/h, wobei sich eine mittlere Verweilzeit von 2,5 Minuten vom Aufgabepunkt des Paraffins (Segment 16D bis 22D) bis zum Extruderauslass (Segment 52D) einstellte.

Die Schmelze wurde mittels eines über eine Adapterplatte mit dem ZSE 40 Extruder verbundenen Unterwassergranulators (Gala underwater pelletizer, Gala Inc.) zu Granulatkörnern mit einem mittleren Durchmesser von 4,5 mm granuliert.

Die Ausgangstoffe und Gewichtsanteile des PCM-Polymer-Compounds bzw. des Granulats waren:

- 15 Gew.% SEEPS (Septon® 4055, Kuraray Co. Ltd)
- 15 Gew.% PMMA (PMMA Type 7N natur, Evonik AG)
- 70 Gew.% PCM (Rubitherm RT52, Rubitherm Technologies GmbH) Prozessparameter, wie die Temperatur der Lochdüse und die Drehzahl des 3-Messerschneidkopfes des Unterwassergranulators wurden im Bereich von 130 bis 210 °C bzw. 1500 bis 3600 U/min variiert, um verschiedene Granulate mit einem mittleren Korndurchmesser von 3 bis 8 mm zu erzeugen.

Die Wärmespeicherkapazität der erhaltenen Granulate bei der Phasenwechseltemperatur des Paraffins von 52,5 °C wurde mittels DSC (Differential Scanning Calorimetry) zu 120 J/g bestimmt.

Das Granulat wurde in einem labortechischen Spinnstand (Randcastle Mini-Extruder ¼ Zoll, Randcastle Inc.) zunächst zu Filamenten mit einer Feinheit von 100 tex (100 g/1000 m) versponnen, indem die aus einer Spinndüse mit 12 Düsenlöchern mit einem Innendurchmesser von jeweils 400 μm austretenden gelartigen 190 °C heißen Schmelzfäden/Filamente mit einer Abzugsgeschwindigkeit von 20 m/min durch ein auf 25 °C temperiertes Wasserbad abgezogen und über Umlenkrollen und ein Abzugswerk auf eine Galette aufgewickelt wurden. Das Granulat aus dem PCM-Polymer-Compound wurde dem Randcastle-Extruder über einen Trichter mit konstanter Schüttrate zugeführt. Der Mantel des Randcastle-Extruders wurde segmentweise derart beheizt, dass sich vorn Einlass bis zum Auslass, d.h. in Richtung des Schmelzflusses drei Schmelzzonen mit Temperaturen von 80 °C, 130 °C und 230 °C ausbildeten. Die Spinndüse des Randcastle-Extruders wurde mittels eines beheizten Metallgitters auf einer Temperatur von 190 °C gehalten. Die Drehzahl der Extruderschnecke betrug 90 U/min.

Der Füllstand des Wassers im Abschreckbecken wurde so eingestellt, dass der Luftspalt, d.h. der Abstand zwischen der Düsenaustrittsfläche und der Wasseroberfläche etwa 3 cm betrug. Versuchsweise wurde die Länge des Luftspalts auf etwa 3,5 cm erhöht, wobei die Häufigkeit von Filamentabrissen um ein Vielfaches anstieg. Auch durch Absenken der Abzugsgeschwindigkeit von 20 m/min auf 10 m/min konnte die Häufigkeit der Filamentabrisse nur geringfügig reduziert werden. Demgegenüber konnte das Schmelzspinnverfahren bei einem Luftspalt von lediglich 1 cm praktisch frei von Filamentabrissen mit Abzugsgeschwindigkeiten von bis zu 30 m/min ausgeführt werden.

Um die Benetzung und damit die Kühlung der hydrophoben Filamente zu verbessern, wurde dem Wasser im Abschreckbecken ein Tensid in einer Konzentration von 1 g/l zugegeben. Dadurch wurde zugleich eine bessere Vereinzelung der 12 Filamente erzielt. Die aus dem PCM-Polymer-Compound gesponnenen Filamente haben überraschenderweise eine hohe Dehnungsreserve von fast 1000 %.

Die ersponnenen Filamente wurden nachfolgend in einer mit einer beheizten Luftstrecke (Rohrheizung) ausgerüsteten Verstreckvorrichtung (Randcastle Inc.) bei einer Temperatur zwischen 25 und 40 °C mit einem Streckfaktor von 1 : 9 verstreckt. An den verstreckten Fasern/Filamenten wurden die folgenden textilphysikalischen Parameter gemessen:

- Faserfeinheit: 11 tex
- Reißkraft: 85 cN
- feinheitsbezogene Reißkraft: 7,8 cN/tex
- Restdehnung : 85 %

Eine Probe der verstreckten Fasern mit einem Gewicht von 100g wurde einem Extraktionstest in 1000 ccm eines Gemisches aus 50 Gew.% Ethylenglykol und 50 Gew.% Wasser unterzogen. In 60 aufeinander folgenden Zyklen wurde das Ethylenglykol/Wasser/ Faser-Gemisch von 30 auf 105 °C erwärmt und hieran anschließend wieder auf 30 °C abgekühlt. Die Dauer jedes der Heiz- und Abkühlzyklen betrug 8 h. Dabei wurde das Ethylenglykol/Wasser/Faser-Gemisch mittels eines Rührers ständig in Bewegung gehalten.

Nach Beendigung der 60 Temperaturzyklen wurden die Fasern entnommen und die Trübung des Ethylenglykol/Wasser-Gemischs mittels Turbidimeter zu kleiner/gleich 30 NTU bestimmt. Zudem wurde mittels GC-FID (Mineralkohlenwasserstoff-Detektionseinheit) ein Paraffingehalt von 200 ppm gemessen.

Beispiel 2:

In gleicher Weise wie in Beispiel 1 wurde ein Granulat hergestellt aus einem PCM-Polymer-Compound der folgenden Zusammensetzung:

- 15 Gew.% SEEPS (Septon® 4055, Kuraray Co. Ltd)
- 15 Gew.% PMMA (PMMA Type 7N natur, Evonik AG)
- 4 Gew.% Multiwall Carbon Nanotubes (NC 7000, NanocylS.A.)
- 66 Gew.% PCM (Rubitherm RT52, Rubitherm Technologies GmbH)

Prozessparameter, wie die Temperatur der Lochdüse und die Drehzahl des 3-Messerschneidkopfes des Unterwassergranulators wurden im Bereich von 130 bis 210 °C bzw. 1500 bis 3600 U/min variiert, um verschiedene Granulate mit einem mittleren Korndurchmesser von 3 bis 8 mm zu erzeugen.

Die Wärmespeicherkapazität der erhaltenen Granulate bei der Phasenwechseltemperatur des Paraffins von 52,5 °C wurde mittels DSC (Differential Scanning Calorimetry) zu 113 J/g bestimmt.

Das Granulat wurde in einem labortechischen Spinnstand (Randcastle Mini-Extruder ¼ Zoll, Randcastle Inc.) zunächst zu Filamenten mit einer Feinheit von 80 tex (80 g/1000 m) versponnen, indem die aus einer Spinndüse mit 12 Düsenlöchern mit einem Innendurchmesser von jeweils 400 μm austretenden gelartigen 190 °C heißen Schmelzfäden/Filamente mit einer Abzugsgeschwindigkeit von 40 m/min durch ein auf 25 °C temperiertes Wasserbad abgezogen und über Umlenkrollen und ein Abzugswerk auf eine Galette aufgewickelt wurden. Das Granulat aus dem PCM-Polymer-Compound wurde dem Randcastle-Extruder über einen Trichter mit konstanter Schüttrate zugeführt. Der Mantel des Randcastle-Extruders wurde segmentweise derart beheizt, dass sich vom Einlass bis zum Auslass, d.h. in Richtung des Schmelzflusses drei Schmelzzonen mit Temperaturen von 80 °C, 130 °C und 230 °C ausbildeten. Die Spinndüse des Randcastle-Extruders wurde über ein Metallgitter auf einer Temperatur von 190 °C gehalten. Die Drehzahl der Extruderschnecke betrug 90 U/min.

Der Füllstand des Wassers im Abschreckbecken wurde so eingestellt, dass der Luftspalt, d.h. der Abstand zwischen der Düsenaustrittsfläche und der Wasseroberfläche etwa 4,5 cm betrug. Versuchsweise wurde die Länge des Luftspalts auf etwa 5 cm erhöht, wobei die Häufigkeit von Filamentabrissen um ein Vielfaches anstieg. Auch durch Absenken der Abzugsgeschwindigkeit von 40 m/min auf 10 m/min konnte die Häufigkeit der Filamentabrisse nur geringfügig reduziert werden. Demgegenüber konnte das Schmelzspinnverfahren bei einem Luftspalt von 3 cm praktisch frei von Filamentabrissen mit Abzugsgeschwindigkeiten von bis zu 40 m/min ausgeführt werden.

Um die Benetzung und damit die Kühlung der hydrophoben Filamente zu verbessern, wurde dem Wasser im Abschreckbecken ein Tensid in einer Konzentration von 1 g/l zugegeben. Dadurch wurde zugleich eine bessere Vereinzelung der 12 Filamente erzielt. Die aus dem PCM-Polymer-Compound gesponnenen Filamente hatten eine hohe Dehnungsreserve von fast 1000 %.

Die ersponnenen Filamente wurden nachfolgend in einer mit einer beheizten Luftstrecke (Rohrheizung) ausgerüsteten Verstreckvorrichtung (Randcastle Inc.) bei einer Temperatur zwischen 25 und 40 °C mit einem Streckfaktor von 1 : 10 verstreckt. Die in dem PCM-Polymer-Compound enthaltenen CarbonNanotubes steigerten die Festigkeit der ersponnenen Filamente beträchtlich und ermöglichten das Spinnen und Verstrecken sehr dünner Filamente. An den verstreckten Fasern/Filamenten wurden die folgenden textilphysikalischen Parameter gemessen:

- Faserfeinheit: 10 tex
- Reißkraft: 100 cN
- feinheitsbezogene Reißkraft: 10 cN/tex
- Restdehnung: 90 %

Eine Probe der verstreckten Fasern mit einem Gewicht von 100 g wurde einem Extraktionstest in 1000 ccm eines Gemisches aus 50 Gew.% Ethylenglykol und 50 Gew.% Wasser unterzogen. In 60 aufeinander folgenden Zyklen wurde das Ethylenglykol/Wasser/Faser-Gemisch von 30 auf 105 °C erwärmt und hieran anschließend wieder auf 30 °C abgekühlt. Die Dauer jedes der Heiz- und Abkühlzyklen betrug 8 h. Dabei wurde das Ethylenglykol/Wasser/Faser-Gemisch mittels eines Rührers ständig in Bewegung gehalten.

Nach Beendigung der 60 Temperaturzyklen wurden die Fasern entnommen und die Trübung des Ethylenglykol/Wasser-Gemischs mittels Turbidimeter zu kleiner/gleich 30 NTU bestimmt. Zudem wurde mittels GC-FID (Mineralkohlenwasserstoff-Detektionseinheit) ein Paraffingehalt von 200 ppm gemessen.

Beispiel 3:

Mittels eines Doppelschneckenextruders des Typs ZSK 25 (Firma Coperion) mit einem Verhältnis von Länge zu Durchmesser von 40 : 1 wurde ein PCM-Polymer-Compound mit folgender Zusammensetzung:

- 15 Gew.% SEEPS (Septon® 4055, Kuraray Co. Ltd)
- 15 Gew.% PMMA (PMMA Type 7N natur, Evonik AG)
- 70 Gew.% PCM (Rubitherm RT52, Rubitherm Technologies GmbH) plastifiziert bzw. geschmolzen. Hierzu wurden die ersten beiden Zonen (Segmente 4D und 8D) des ZSK 25 Extruders wurden auf Temperaturen von 250 °C bzw. 260 °C aufgeheizt, um PMMA und Styrol-Blockcopolymer (SEEPS des Typs Septon® 4055 von Kuraray Co. Ltd) zu schmelzen und zu mischen. Paraffin des Typs RT 52 von Rubitherm Technologies GmbH wurde in einem heizbaren Vorratsbehälter auf eine Temperatur von 120 °C erwärmt und verflüssigt und über hermetisch abdichtende Dosierlanzen und eine Dosiervorrichtung (K-TRon Dosierwaage mit Membranpumpe) der PMMA/SEEPS-Schmelze zugegeben. Die Zugabe des Paraffins erfolgte im Schneckenzonenbereich 12D bis 16D des ZSK 25 Extruders.

Die Schneckendrehzahl und der gesamte Massendurchsatz im ZSK 25 Extruder betrugen 800 U/min und 5 kg/h, wobei sich eine mittlere Verweilzeit von 2,5 Minuten vom Aufgabepunkt des Paraffins (Segment 12D bis 16D) bis zum Extruderauslass einstellte.

Vom Auslass des ZSK 25 Extruders wurde die Schmelze über einen Adapter, eine Schmelzspinnpumpe, einen beheizten Umlenkkopf und eine Spinndüse mit 100 Düsenlöchern mit einem Innendurchmesser von 400 μm sowie über eine Filtertresse zu Filamenten mit einer Dicke von etwa 150 μm versponnen. Die Temperatur der Spinndüse wurde konstant bei 190 °C gehalten.

Die Filamente wurden von der Spinndüse mit einer Geschwindigkeit von 20 m/min über einen Luftspalt von 3 cm Länge und durch ein auf 25 °C temperiertes Wasserbad abgezogen und auf eine Pufferspule gewickelt. Hieran anschließend wurden die Filamente mittels einer mit einer beheizten Luftstrecke (Rohrheizung) ausgerüsteten Verstreckvorrichtung (Randcastle Inc.) bei einer Temperatur von 30 °C mit einem Streckfaktor von 1 : 9 verstreckt.

Beispiel 4:

Mittels eines Doppelschneckenextruders des Typs ZSE 40 (Firma Leistritz) mit einem Verhältnis von Länge zu Durchmesser von 52: 1 wurde zunächst ein Granulat aus einem C16-Dialkylether ( Di-n-Cetylether ), PMMA und SEEPS hergestellt.

Die ersten beiden Zonen (Segmente 4D und 8D) des ZSE 40 Extruders wurden auf Temperaturen von 250 °C bzw. 260 °C aufgeheizt, um PMMA und Styrol-Blockcopolymer (SEEPS des Typs Septon® 4055 von Kuraray Co. Ltd) zu schmelzen und zu mischen. Di-n-cetyl ether der Firma Sasol Germany GmbH wurde in einem heizbaren Vorratsbehälter auf eine Temperatur von 120 °C erwärmt und verflüssigt und über hermetisch abdichtende Dosierlanzen und eine Dosiervorrichtung (K-TRon Dosierwaage mit Membranpumpe) der PMMA/SEEPS-Schmelze zugegeben. Die Zugabe des Dialkylethers erfolgte im Schneckenzonenbereich (Segmente 16D bis 22D) des ZSE 40 Extruders.

Die Schneckendrehzahl und der gesamte Massendurchsatz im ZSE 40 Extruder betrugen 800 U/min und 35 kg/h, wobei sich eine mittlere Verweilzeit von 2,5 Minuten vom Aufgabepunkt des Di-n-cetylethers (Segment 16D bis 22D) bis zum Extruderauslass (Segment 52D) einstellte.

Die Schmelze wurde mittels eines über eine Adapterplatte mit dem ZSE 40 Extruder verbundenen Unterwassergranulators (Gala underwater pelletizer, Gala Inc.) zu Granulatkörnern mit einem mittleren Durchmesser von 4,5 mm granuliert.

Die Ausgangstoffe und Gewichtsanteile des PCM-Polymer-Compounds bzw. des Granulats waren:

- 15 Gew.-% SEEPS (Septon® 4055, Kuraray Co. Ltd)
- 15 Gew.-% PMMA (PMMA Type 7N natur, Evonik AG)
- 70 Gew.-% PCM (Di-n-cetylether, Sasol Germany GmbH)

Prozessparameter, wie die Temperatur der Lochdüse und die Drehzahl des 3-Messerschneidkopfes des Unterwassergranulators wurden im Bereich von 130 bis 210 °C bzw. 1500 bis 3600 U/min variiert, um verschiedene Granulate mit einem mittleren Korndurchmesser von 3 bis 8 mm zu erzeugen.

Die Wärmespeicherkapazität der erhaltenen Granulate bei der Phasenwechseltemperatur des Di-n-cetyl ethers von 54 °C wurde mittels DSC (Differential Scanning Calorimetry) zu 193 J/g bestimmt.

Das Granulat wurde in einem labortechischen Spinnstand (Randcastle Mini-Extruder ¼ Zoll, Randcastle Inc.) zunächst zu Filamenten mit einer Feinheit von 100 tex (100 g/1000 m) versponnen, indem die aus einer Spinndüse mit 12 Düsenlöchern mit einem Innendurchmesser von jeweils 400 μm austretenden gelartigen 120 bis 130 °C heißen Schmelzfäden/Filamente mit einer Abzugsgeschwindigkeit von 40 m/min durch ein auf 5 °C temperiertes Wasserbad abgezogen und über Umlenkrollen und ein Abzugswerk auf eine Galette aufgewickelt wurden. Dabei wurde eine beheizte Düse mit zylindrischer Außenisolierung verwendet, welche 10 mm in das Kühlwasserbad hinein ragte.

Das Granulat aus dem PCM-Polymer-Compound wurde dem Randcastle-Extruder über einen Trichter mit konstanter Schüttrate zugeführt. Der Mantel des Randcastle-Extruders wurde segmentweise derart beheizt, dass sich vom Einlass bis zum Auslass, d.h. in Richtung des Schmelzflusses drei Schmelzzonen mit Temperaturen von 80 °C, 130 °C und 230 °C ausbildeten. Die Spinndüse des Randcastle-Extruders, deren Düsenplattenkopf nunmehr 10 mm in das Kühlwasserbad hinein ragte, wurde mittels eines beheizten Metallgitters und entsprechend gestalteter Außenisolierung in ihrem Inneren auf einer Temperatur von 190 °C gehalten. Unmittelbar an der Austrittstelle der Düse hatten die PCM-Schmelzefädern jedoch schon eine wesentlich verringerte Temperatur von 120 bis 130 °C, was sich als sehr vorteilhaft für die unmittelbare Fadenausbildung erwies.

Die Drehzahl der Extruderschnecke betrug 90 U/min.

Durch das unmittelbare geringfügige Eintauchen der Spinndüse in das auf 25 °C, temperierte Kühlwasserbad 10 mm unterhalb der Wasseroberfläche konnten die Einzel-Fadenabrisse bei sogar noch weiter erhöhter Abzugsgeschwindigkeit bis 50 m/min vermieden werden.

Um die Benetzung und damit die Kühlung der hydrophoben Filamente zu verbessern, wurde dem Wasser im Abschreckbecken ein Tensid in einer Konzentration von 1 g/l zugegeben. Dadurch wurde zugleich eine bessere Vereinzelung der 12 Filamente erzielt. Die aus dem PCM-Polymer-Compound gesponnenen Filamente haben überraschenderweise eine hohe Dehnungsreserve von fast 1000 %.

Die ersponnenen Filamente wurden nachfolgend in einer mit einer beheizten Luftstrecke (Rohrheizung) ausgerüsteten Verstreckvorrichtung (Randcastle Inc.) bei einer Temperatur zwischen 40 und 45 °C mit einem Streckfaktor von 1 : 9 verstreckt. An den verstreckten Fasern/Filamenten wurden die folgenden textilphysikalischen Parameter gemessen:

- Faserfeinheit: 11 tex
- Reißkraft: 87 cN
- feinheitsbezogene Reißkraft : 8,1 cN/tex
- Restdehnung : 80 %

Eine Probe der verstreckten Fasern mit einem Gewicht von 100 g wurde einem Extraktionstest in 1000 cm³ eines Gemisches aus 50 Gew.-% Ethylenglykol und 50 Gew.-% Wasser unterzogen. In 60 aufeinander folgenden Zyklen wurde das Ethylenglykol/Wasser/Faser-Gemisch von 30 auf 105 °C erwärmt und hieran anschließend wieder auf 30 °C abgekühlt. Die Dauer jedes der Heiz- und Abkühlzyklen betrug 8 Stunden. Dabei wurde das Ethylenglykol/Wasser/Faser-Gemisch mittels eines Rührers ständig in Bewegung gehalten.

Nach Beendigung der 60 Temperaturzyklen wurden die Fasern entnommen und die Trübung des Ethylenglykol/Wasser-Gemischs mittels Turbidimeter zu kleiner/gleich 30 NTU bestimmt. Zudem wurde mittels GC-FID (Mineralkohlenwasserstoff-Detektionseinheit) ein Gehalt an Di-n-cetylether von 120 ppm gemessen.

Vergleichsbeispiel 1:

Im Weiteren wurden mit dem PCM-Polymer-Compound des Beispiels 1 Spinnversuche durchgeführt, bei denen zum Abschrecken der Filamente anstelle eines Wasserbades ein mit gekühlter Luft betriebener Anblasschacht verwendet wurde. Diese Versuche scheiterten aufgrund ständiger Filamentabrisse. Nach einer Spinnlänge von etwa 10 - 15 cm (Abstand von der Spinndüse) waren mehrere der aus der Spinndüse abgezogenen 12 Filamente abgerissen, wobei die losen Enden der abgerissenen Filamente mit den intakten Filamenten oder der Spinndüse verklebten, so dass der Schmelzspinnprozess nach kurzer Zeit abgebrochen werden musste.

Vergleichsbeispiel 2:

Gemäß dem Verfahren nach Beispiel 3 wurde versucht aus einem PCM-Polymer-Compound der folgenden Zusammensetzung:

- 30 Gew.% SEEPS (Septon® 4055, Kuraray Co. Ltd)
- 70 Gew.% PCM (Rubitherm RT52, Rubitherm Technologies GmbH)

Fasern zu spinnen. Diese Versuche blieben erfolglos, weil die bei einer Temperatur von 190 °C aus der Spinndüse austretenden Filamente sofort verklebten. Auch eine stufenweise Absenkung der Düsentemperatur auf bis zu 130 °C führte zu keiner merklichen Verbesserung.

**Patentansprüche**

1. Verfahren zum Herstellen faser- oder folienartiger Formkörper aus einer plastifizierten Mischung, die bezogen auf ihr Gewicht, aus 60 bis 10 Gew.% einer Trägerkomponente und 40 bis 90 Gew.% eines Phasenwechselmaterials besteht, wobei, bezogen auf das Gewicht der plastifizierten Mischung, die Trägerkomponente 5 bis 20 Gew.% eines Polymers oder Polymerblends aus der Gruppe LDPE, HDPE, PMMA, Polycarbonat und Mischungen davon, 5 bis 20 Gew.% eines Styrol-Blockcopolymers und 0 bis 20 Gew.% eines oder mehrerer Additive enthält, und das Phasenwechselmaterial gewählt ist aus der Gruppe umfassend natürliche und synthetische Paraffine, langkettige Dialkylether, langkettige Alkylalkohole, niedermolekulare, hochkriställine PE-Wachse, Polyethylenglykol und Mischungen davon, und die plastifizierte Mischung mit einer Temperatur von 130 bis 220 °C durch eine Extrusionsdüse zu faser- oder folienartigen Formkörpern extrudiert wird, **dadurch gekennzeichnet, dass** die Formkörper innerhalb einer Zeitspanne von 0,05 bis 4 s nach dem Austritt aus der Extrusionsdüse auf eine Temperatur im Bereich von 10 bis 80 °C abgeschreckt werden.

2. Verfahren nach Anspruch 1, **dadurch gekennzeichnet, dass** die Formkörper auf eine Temperatur im Bereich von 10 bis 60 °C, vorzugsweise 15 bis 40 °C, und insbesondere 15 bis 25 °C abgeschreckt werden.

3. Verfahren nach Anspruch 1 oder 2, **dadurch gekennzeichnet, dass** die plastifizierte Mischung aus Trägerkomponente und Phasenwechselmaterial mit einer Temperatur von 130 bis 220 °C, bevorzugt von 160 bis 200 °C, extrudiert wird.

4. Verfahren nach einem oder mehreren der Ansprüche 1 bis 3, **dadurch gekennzeichnet, dass** die Formkörper mit einer mittleren Kühlrate von 60 bis 600 K/s, vorzugsweise 80 bis 300 K/s, und insbesondere 120 bis 200 K/s abgeschreckt werden.

5. Verfahren nach einem oder mehreren der Ansprüche 1 bis 4, **dadurch gekennzeichnet, dass** die Trägerkomponente als Pulverblend mit einer Korngröße von kleiner/gleich 2 mm vorgelegt und in einer Plastifiziervorrichtung gemischt und plastifiziert wird; und das Phasenwechselmaterial in flüssiger Form mit einer Temperatur im Bereich von 50 bis 130 °C der Plastifiziervorrichtung zugeführt und mit der plastifizierten Trägerkomponente während einer Zeitspanne von 2,5 bis 10 min gemischt wird.

6. Verfahren nach einem oder mehreren der Ansprüche 1 bis 5, **dadurch gekennzeichnet, dass** die Formkörper zum Abschrecken mit einem Kühlfluid beaufschlagt werden, insbesondere dass die Formkörper durch ein Wasserbad, das gegebenenfalls Tenside in einer Konzentration von 0,1 bis 3 g/l enthält, geführt werden.

7. Verfahren nach einem oder mehreren der Ansprüche 1 bis 6, **dadurch gekennzeichnet, dass** die Formkörper nach dem Austritt aus der Extrusionsdüse und vor dem Abschrecken durch einen Luftspalt mit einer Länge von 0,5 bis 10 cm, vorzugsweise 1 bis 5 cm geführt werden.

**8.** Verfahren nach einem oder mehreren der Ansprüche 1 bis 7, **dadurch gekennzeichnet, dass** die Formkörper von der Extrusionsdüse mit einer Geschwindigkeit von 5 bis 50 m/min, vorzugsweise 10 bis 30 m/min abgezogen werden.

**9.** Verfahren nach einem oder mehreren der Ansprüche 1 bis 8, **dadurch gekennzeichnet, dass** die Formkörper nach dem Austritt aus der Extrusionsdüse mit einem Streckfaktor von 1,1 bis 2 verstreckt werden.

**10.** Verfahren nach Anspruch 9, **dadurch gekennzeichnet, dass** die Formkörper mit einem Streckfaktor von 2 bis 12 nachverstreckt werden.

**11.** Formkörper, der bezogen auf sein Gewicht, aus 60 bis 10 Gew.% einer Trägerkomponente und 40 bis 90 Gew.% eines Phasenwechselmaterials besteht, wobei, bezogen auf das Gewicht des Formkörpers, die Trägerkomponente 5 bis 20 Gew.% eines Polymers oder Polymerblends aus der Gruppe LDPE, HDPE, PMMA, Polycarbonat und Mischungen davon, 5 bis 20 Gew.% eines Styrol-Blockcopolymers und 0 bis 20 Gew.% eines oder mehrerer Additive enthält, und das Phasenwechselmaterial gewählt ist aus der Gruppe umfassend natürliche und synthetische Paraffine, Polyethylenglykol und Mischungen davon, **dadurch gekennzeichnet, dass** der Formkörper eine Faser mit einer Feinheit von 5 bis 70 tex, einer Restdehnung von 5 bis 100 % und einer feinheitsbezogenen Reißkraft von 7 bis 15 cN/tex oder eine Folie mit einer Dicke von 100 bis 1000 $\mu$m, einer Restdehnung von 10 bis 100 % und einer Reißfestigkeit von 50 bis 200 N/mm$^2$ ist, und bei der Phasenübergangstemperatur des Phasenwechselmaterials eine Wärmekapazität von 70 bis 270 J/g aufweist.

**12.** Formkörper nach Anspruch 11, **dadurch gekennzeichnet, dass** das Phasenwechselmaterial eine Phasenübergangstemperatur im Bereich von 30 bis + 135 °C hat.

**13.** Formkörper nach Anspruch 11 oder 12, **dadurch gekennzeichnet, dass** das Styrol-Blockcopolymer ein Di- oder Tri-Blockcopolymer ist und eine erste und zweite polymere Komponente A und B und optional eine dritte polymere Komponente C umfasst, wobei A Styrol ist und B und C gewählt sind aus Ethylen, Butadien, Butylen, Isopren und Propylen.

**14.** Formkörper nach einem oder mehreren der Ansprüche 11 bis 13, **dadurch gekennzeichnet, dass** das Styrol-Blockcopolymer gewählt ist aus SB (Styrol-Butadien), SBS (Styrol-Butadien-Styrol), SIS (Styrol-Isopren-Styrol), SEBS (Styrol-Ethylen-Butylen-Styrol), SEPS (Styrol-Ethylen-Propylen-Styrol) und SEEPS (Styrol-poly-(Isopren-Butadien)-Styrol).

**15.** Formkörper nach einem oder mehreren der Ansprüche 11 bis 14, **dadurch gekennzeichnet, dass** er als Additiv ein nanoskaliges Material, insbesondere Carbon-Nanotubes enthält.

**16.** Formkörper nach Anspruch 11, **dadurch gekennzeichnet, dass** er nach einem Verfahren gemäß den Ansprüchen 1 bis 10 hergestellt ist.

**Claims**

**1.** A process for producing fibrous or foil-like moldings made of a plastified mixture which is composed, based on its weight, of from 60 to 10 % by weight of a carrier component and from 40 to 90 % by weight of a phase change material, where, based on the weight of the plastified mixture, the carrier component comprises from 5 to 20 % by weight of a polymer or polymer blend from the group of LDPE, HDPE, PMMA, polycarbonate, and mixtures thereof, from 5 to 20 % by weight of a styrene block copolymer, and from 0 to 20 % by weight of one or more additives, and the phase change material has been selected from the group consisting of natural and synthetic paraffins, long-chain dialkyl ethers, long-chain alkyl alcohols, low-molecular-weight highly crystalline PE waxes, polyethylene glycol, and mixtures thereof, and the plastified mixture is extruded at a temperature of from 130 to 220 °C through an extrusion die to give fibrous or foil-like moldings, **characterized in that**, within a period of from 0.05 to 4 s after discharge from the extrusion die, the moldings are quenched to a temperature in the range from 10 to 80 °C.

**2.** The process as claimed in claim 1, **characterized in that** the moldings are quenched to a temperature in the range from 10 to 60 °C, preferably from 15 to 40 °C, and in particular from 15 to 25 °C.

**3.** The process as claimed in claim 1 or 2, **characterized in that** the plastified mixture made of carrier component and phase change material is extruded at a temperature of from 130 to 220 °C, preferably from 160 to 200 °C.

**4.** The process as claimed in one or more of claims 1 to 3, **characterized in that** the moldings are quenched at an average cooling rate of from 60 to 600 K/s, preferably from 80 to 300 K/s, and in particular from 120 to 200 K/s.

**5.** The process as claimed in one or more of claims 1 to 4, **characterized in that** the carrier component is charged in the form of powder blend with grain size smaller than/equal to 2 mm and is mixed and plastified in a plastifying device; and the phase change material is introduced in liquid form at a temperature in the range from 50 to 130 °C to the plastifying device and is mixed with the plastified carrier component during a period of from 2.5 to 10 min.

6. The process as claimed in one or more of claims 1 to 5, **characterized in that** for the quenching process the moldings are treated with a coolant fluid, and in particular that the moldings are passed through a water bath which optionally comprises surfactants at a concentration of from 0.1 to 3 g/l.

7. The process as claimed in one or more of claims 1 to 6, **characterized in that** after discharge from the extrusion die and prior to quenching the moldings are passed through an air gap of length from 0.5 to 10 cm, preferably from 1 to 5 cm.

8. The process as claimed in one or more of claims 1 to 7, **characterized in that** the velocity at which the moldings are drawn off from the extrusion die is from 5 to 50 m/min, preferably from 10 to 30 m/min.

9. The process as claimed in one or more of claims 1 to 8, **characterized in that** after discharge from the extrusion die the moldings are oriented with a stretching factor of from 1.1 to 2.

10. The process as claimed in claim 9, **characterized in that** the moldings are subjected to subsequent orientation with a stretching factor of from 2 to 12.

11. A molding which, based on its weight, is composed of from 60 to 10 % by weight of a carrier component and from 40 to 90 % by weight of a phase change material, where, based on the weight of the molding, the carrier component comprises from 5 to 20 % by weight of a polymer or polymer blend from the group of LDPE, HDPE, PMMA, polycarbonate, and mixtures thereof, from 5 to 20 % by weight of a styrene block copolymer, and from 0 to 20 % by weight of one or more additives, and the phase change material has been selected from the group consisting of natural and synthetic paraffins, polyethylene glycol, and mixtures thereof, **characterized in that** the molding is a fiber of fineness from 5 to 70 tex, with residual elongation from 5 to 100 %, and with breaking force per unit of fineness of from 7 to 15 cN/tex, or a foil of thickness from 100 to 1000 $\mu$m, with residual elongation of from 10 to 100 %, and with ultimate tensile strength of from 50 to 200 N/mm$^2$, and its heat capacity at the phase transition temperature of the phase change material is from 70 to 270 J/g.

12. The molding as claimed in claim 11, **characterized in that** the phase transition temperature of the phase change material is in the range from 30 to +135 °C.

13. The molding as claimed in claim 11 or 12, **characterized in that** the styrene block copolymer is a di- or triblock copolymer and encompasses a first and second polymeric component A and B and optionally a third polymeric component C, where A is styrene and B and C have been selected from ethylene, butadiene, butylene, isoprene, and propylene.

14. The molding as claimed in one or more of claims 11 to 13, **characterized in that** the styrene block copolymer has been selected from SB (styrene-butadiene), SBS (styrene-butadiene-styrene), SIS (styrene-isoprene-styrene), SEBS (styrene-ethylene-butylene-styrene), SEPS (styrene-ethylene-propylene-styrene), and SEEPS (styrene-poly(isoprene-butadiene)-styrene).

15. The molding as claimed in one or more of claims 11 to 14, **characterized in that** it comprises, as additive, a nanoscale material, in particular carbon nanotubes.

16. The molding as claimed in claim 11, **characterized in that** it has been produced by a process as claimed in claims 1 to 10.

**Revendications**

1. Procédé de fabrication de corps moulés du type fibre ou feuille à partir d'un mélange plastifié qui, par rapport à son poids, est constitué de 60 à 10 % en poids d'un composant porteur et de 40 à 90 % en poids d'un matériau à changement de phase, selon lequel le composant porteur contient, par rapport au poids du mélange plastifié, 5 à 20 % en poids d'un polymère ou d'un mélange de polymère choisi dans le groupe qui comprend le PEBD, le PEHD, le PMMA, le polycarbonate et des mélanges de ceux-ci, 5 à 20 % en poids d'un copolymère en bloc de styrène et 0 à 20 % en poids d'un ou plusieurs additifs, selon lequel le matériau à changement de phase est choisi dans le groupe qui comprend des paraffines naturelles et synthétiques, des éthers de dialkyle à chaîne longue, des alcools d'alkyle à chaîne longue, des cires de polyéthylène faiblement moléculaires et fortement cristallines, des polyéthylène-glycols et des mélanges de ceux-ci et selon lequel le mélange plastifié est extrudé à une température comprise entre 130 et 220 °C via une buse d'extrusion pour former des corps moulés du type fibre ou feuille, **caractérisé en ce que**, après la sortie de la buse d'extrusion, on soumet les corps moulés à une trempe à une température comprise entre 10 et 80 °C pendant un intervalle de temps allant de 0,05 à 4 secondes.

**2.** Procédé selon la revendication 1, **caractérisé en ce que** les corps moulés sont soumis à une trempe à une température comprise entre 10 et 60 °C, de préférence entre 15 et 40 °C, et notamment entre 15 et 25 °C.

**3.** Procédé selon la revendication 1 ou 2, **caractérisé en ce que** le mélange plastifié constitué d'un composant porteur et d'un matériau à changement de phase est extrudé à une température comprise entre 130 et 220 °C, de préférence entre 160 et 200 °C.

**4.** Procédé selon l'une ou plusieurs des revendications 1 à 3, **caractérisé en ce que** les corps moulés sont soumis à une trempe avec un taux de refroidissement moyen de 60 à 600 K/s, de préférence de 80 à 300 K/s, et notamment de 120 à 200 K/s.

**5.** Procédé selon l'une ou plusieurs des revendications 1 à 4, **caractérisé en ce que** le composant porteur est présent sous forme de mélange poudreux ayant une dimension de grain inférieure ou égale à 2 mm et est mélangé et plastifié dans un dispositif de plastification ; et **en ce que** le matériau à changement de phase est amené sous forme liquide à une température comprise entre 50 et 130 °C jusqu'au dispositif de plastification et est mélangé au composant porteur plastifié pendant un intervalle de temps allant de 2,5 à 10 minutes.

**6.** Procédé selon l'une ou plusieurs des revendications 1 à 5, **caractérisé en ce que**, pour leur trempe, les corps moulés sont exposés à un fluide de refroidissement, notamment **en ce que** les corps moulés sont guidés à travers un bain-marie qui contient éventuellement des agents tensio-actifs à une concentration de 0,1 à 3 g/l.

**7.** Procédé selon l'une ou plusieurs des revendications 1 à 6, **caractérisé en ce que**, après la sortie de la buse d'extrusion et avant la trempe, les corps moulés sont guidés à travers une fente d'aération d'une longueur comprise entre 0,5 et 10 cm, de préférence entre 1 et 5 cm.

**8.** Procédé selon l'une ou plusieurs des revendications 1 à 7, **caractérisé en ce que** les corps moulés sont extraits de la buse d'extrusion à une vitesse comprise entre 5 et 50 m/min, de préférence entre 10 et 30 m/min.

**9.** Procédé selon l'une ou plusieurs des revendications 1 à 8, **caractérisé en ce que**, après la sortie de la buse d'extrusion, les corps moulés sont étirés avec un coefficient d'étirage allant de 1,1 à 2.

**10.** Procédé selon la revendication 9, **caractérisé en ce que** les corps moulés sont étirés ultérieurement avec un coefficient d'étirage allant de 2 à 12.

**11.** Corps moulé qui, par rapport à son poids, est constitué de 60 à 10 % en poids d'un composant porteur et de 40 à 90 % en poids d'un matériau à changement de phase, dans lequel le composant porteur contient, par rapport au poids du corps moulé, 5 à 20 % en poids d'un polymère ou d'un mélange de polymère choisi dans le groupe qui comprend le PEBD, le PEHD, le PMMA, le polycarbonate et des mélanges de ceux-ci, 5 à 20 % en poids d'un copolymère en bloc de styrène et 0 à 20 % en poids d'un ou plusieurs additifs, dans lequel le matériau à changement de phase est choisi dans le groupe qui comprend des paraffines naturelles et synthétiques, des polyéthylène-glycols et des mélanges de ceux-ci, **caractérisé en ce que** le corps moulé est une fibre avec une finesse comprise entre 5 et 70 tex, avec un allongement restant compris entre 5 et 100 % et avec une résistance à la déchirure par rapport à la finesse comprise entre 7 et 15 cN/tex ou une feuille avec une épaisseur comprise entre 100 et 1 000 $\mu$m, avec un allongement restant compris entre 10 et 100 % et avec une résistance à la déchirure comprise entre 50 et 200 N/mm$^2$ et présente, à la température de transition entre phases du matériau à changement de phase, une capacité thermique allant de 70 à 270 J/g.

**12.** Corps moulé selon la revendication 11, **caractérisé en ce que** le matériau à changement de phase a une température de transition entre phases comprise entre 30 et +135 °C.

**13.** Corps moulé selon la revendication 11 ou 12, **caractérisé en ce que** le copolymère en bloc de styrène est un copolymère di- ou tri-bloc et comprend un premier et un deuxième composant polymère A et B et optionnellement un troisième composant polymère C, A étant un styrol et B et C étant choisis dans le groupe qui comprend l'éthylène, le butadiène, le butylène, l'isoprène et le propylène.

**14.** Corps moulé selon l'une ou plusieurs des revendications 11 à 13, **caractérisé en ce que** le copolymère en bloc de styrène est choisi dans le groupe qui comprend le styrène-butadiène (SB), le styrène-butadiène-styrène (SBS), le styrène-isoprène-styrène (SIS), le styrène-éthylène-butylène-styrène (SEBS), le styrène-éthylène-propylène-styrène (SEPS) et le styrène-poly-(isoprène-butadiène)-styrène (SEEPS).

**15.** Corps moulé selon l'une ou plusieurs des revendications 11 à 14, **caractérisé en ce qu'**il contient comme additif un matériau à échelle nanométrique, notamment des nanotubes de carbone.

16. Corps moulé selon la revendication 11, **caractérisé en ce qu'**il est fabriqué selon un procédé selon les revendications 1 à 10.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5885475 A
- US 4737537 A
- US 4908166 A
- DE 4336097 A1
- US 20030035951 A1
- US 20070089276 A1
- US 20020105108 A
- WO 2009118344 A1
- DE 102008015782